# EUROPÄISCHE PATENTSCHRIFT

(11) **EP 0 496 971 B1**
(45) Veröffentlichungstag und Bekanntmachung des Hinweises auf die Patenterteilung: **08.09.1993**
(21) Anmeldenummer: 91120224.0
(22) Anmeldetag: 27.11.1991
(51) Int. Cl.: A01J 5/12

(54) **Pulsator für Melkmaschinen**
Pulsator for milking machines
Pulsateur pour machines à traire

(30) Priorität: 28.01.1991 DE 4102369
(43) Veröffentlichungstag der Anmeldung: 05.08.1992
(73) Patentinhaber: Westfalia Separator AG, 59302 Oelde (DE)
(72) Erfinder: Icking, Friedrich, Dipl.-Ing., W-4740 Oelde (DE); Krone, Otto, Dipl.-Ing., W-4452 Beesten (DE)

(56) Entgegenhaltungen:
- WO-A-89/02216
- DE-C- 3 712 419
- FR-A- 2 178 869

## Beschreibung

Die Erfindung bezieht sich auf einen Pulsator für Melkmaschinen, bestehend aus einem eine Steuerspindel führenden Gehäuse, einem von der Steuerspindel betätigten Steuerschieber zur abwechselnden Verbindung von Pulsatorausgängen mit einer Unterdruckquelle und Atmosphäre, jeweils einer spindelendseitig in einer Arbeitskammer angeordneten, die Hin- und Herbewegung der Steuerspindel bewirkenden Membrane und einer in seinen jeweiligen Endpositionen durch den Steuerschieber ausgelösten Schaltvorrichtung zur wechselseitig und gegensinnig erfolgenden Verbindung der Arbeitskammern mit Unterdruck und Atmosphäre.

Ein derartiger, dem Oberbegriff des ersten Anspruchs entsprechender, im Wechseltakt arbeitender Pulsator ist beispielsweise bekannt aus der DE 37 02 419 C1 und dient dazu, die Zwischenräume zweier Melkbecherpaare eines Melkzeuges abwechselnd mit einer Unterdruckquelle und der Atmosphäre zu verbinden. Die Dauer, in der die Melkbecherzwischenräume mit der Unterdruckquelle verbunden sind, nennt man Saugphase. Die zeitliche Dauer der Saugphase kann durch die Veränderung der Taktzahl des Pulsators beeinflußt werden.

Durch unvermeidbare Fertigungstoleranzen kann die Bewegung der Steuerspindel in den beiden Bewegungsrichtungen jedoch unterschiedlich schnell sein. Dadurch kommt es zu einem unterschiedlichen zeitlichen Verlauf der von den beiden Arbeitskammern des Pulsators gesteuerten Unterdrücke und Atmosphärendrücke, die abwechselnd auf die Zwischenräume der beiden Melkbecherpaare übertragen werden. Diese ungleichmäßige Arbeitsweise der bekannten Pulsatoren wird als Hinkgrad bezeichnet.

Bei dem bekannten Pulsator sind zur Korrektur des Hinkgrades zumindest in einer der Arbeitskammern Mittel vorgesehen, durch die das Volumen der Arbeitskammer verändert werden kann.

Das Volumen der Arbeitskammern hat einen direkten Einfluß auf den zeitlichen Verlauf des Druckauf- und -abbaues in diesen Arbeitskammern. Wird das Volumen verkleinert, so wird der Druckauf- und -abbau entsprechend schneller vonstatten gehen als bei einem größeren Volumen. Durch Verkleinern des Volumens der Arbeitskammer kann damit die Bewegung der Steuerspindel beschleunigt werden, wodurch sich die Taktzahl des Pulsators erhöht und die Dauer der Saugphase verkürzt. Wird nur das Volumen einer Arbeitskammer verkleinert, so bewirkt dies eine Verkürzung der Saugphase nur in der entsprechenden Pulsatorhälfte und damit auch eine Veränderung des Hinkgrades.

Die bei dem bekannten Pulsator vorgesehenen Mittel bedingen entweder einen relativ hohen konstruktiven zusätzlichen chen Aufwand oder lassen nur eine stufenweise Veränderung des Hinkgrades zu.

Aus der WO 89 02 216 A1 ist ein ebenfalls dem Oberbegriff des ersten Anspruchs entsprechender Pulsator bekannt, bei dem zur Korrektur des Hinkgrades Mittel vorgesehen sind, mit denen eine Einstellung der Endpositionen des Steuerventils zu den ihm zugeordneten Steuerkanälen für Unterdruck und Atmosphäre vorgenommen werden kann in der Bewegungsrichtung des Steuerschiebers, wobei der Arbeitshub des Steuerschiebers nicht verändert wird. Eine derartige Einstellmöglichkeit ist jedoch nicht geeignet für Pulsatoren mit Steuerschiebern, deren Position zu den Steuerkanälen festgelegt ist durch zusätzliche Steueröffnungen, die in den jeweiligen Endpositionen des Steuerschiebers von diesem aktiviert werden und dadurch zur Betätigung der Schaltvorrichtung führen, die ihrerseits die Arbeitskammern wechselweise umschaltet von Unterdruck auf Atmosphärendruck bzw. umgekehrt. Ein Richtungswechsel des Steuerschiebers erfolgt erst, wenn eine der Steueröffnungen von einer diesen am Steuerschieber zugeordneten Steuerkammer überdeckt wird.

Aufgabe der vorliegenden Erfindung ist es, einen Pulsator mit einem zu den Steuerkanälen funktionsbedingt fixierten Steuerschieber zu schaffen, dessen Hinkgrad und Taktzahl sich mit geringem konstruktiven Aufwand stufenlos auf einfache Weise korrigieren läßt.

Diese Aufgabe wird gemäß Anspruch 1 dadurch gelöst, daß Mittel vorgesehen sind, durch die eine axiale Verschiebung der Lage zumindest einer der Membranen relativ zur Steuerspindel ermöglicht wird.

Die Membranen setzen ihrer Auslenkung aus der neutralen Stellung durch den sich hin- und herbewegenden Steuerschieber eine Kraft entgegen, die eine Funktion der Federkonstante der Membranen ist. Diese Kraft wirkt verzögernd auf die Bewegungen des Steuerschiebers. Haben die beiden Membranen die gleiche Federkonstante und liegen auch sonst keine Fertigungstoleranzen vor, so benötigt der Steuerschieber zum Erreichen der beiden Endpositionen die gleiche Zeit. In diesem Fall wäre der Hinkgrad Null. Dieser Idealzustand kommt jedoch nie vor, so daß Korrekturen am Hinkgrad vorgenommen werden müssen, wenn dieser einen tolerierbaren Wert überschreitet.

Wird mindestens eine der Membranen auf der Steuerspindel axial verschoben, so wird die betreffende Membrane vorgespannt und erzeugt dadurch eine zusätzliche Kraft in Bewegungsrichtung des Steuerschiebers.

Wird die Membrane beispielsweise axial zum Ende der Steuerspindel verschoben, so wirkt die Vorspannungskraft entgegen der auf diese Membrane gerichteten Bewegung des Steuerschiebers und verlängert dadurch die Zeit bis zum Erreichen der betreffenden Endposition des Steuerschiebers. Eine entgegengesetzte Wirkung wird bei einer Verschiebung der Membran in Richtung des Steuerschiebers erreicht. Durch gleichzeitiges Verschieben der Membran zum Ende der Steuerspindel auf der einen Seite und in Richtung des Steuerschiebers auf der entgegengesetzten Seite der Steuerspindel wird der gewünschte Effekt noch verstärkt. Es hat sich überraschend gezeigt, daß schon eine Verschiebung der Membran um Bruchteile eines Millimeters ausreicht, um den fertigungsbedingten Hinkgrad zu korrigieren.

Die gewünschte Taktzahl des Pulsators kann auf einfache Weise dadurch eingestellt werden, daß beide Membranen im gleichen Maße zu den ihnen zugeordneten Arbeitskammern hin- oder von ihnen wegbewegt werden, wodurch das aktive Volumen der Arbeitskammern vergrößert oder verkleinert wird.

Bei der Ausgestaltung gemäß Anspruch 1 ist mindestens eine der Membranen mit einer Gewindebuchse versehen, die auf einem endseitig an der Steuerspindel vorgesehenen Gewinde positioniert ist, wobei die Steuerspindel drehbar und axial fixiert im Steuerschieber gelagert ist. Durch Drehen der Steuerspindel wird die Gewindebuchse und damit auch die entsprechende Membrane axial zur Steuerspindel bewegt und dadurch der Hinkgrad beeinflußt. Sind in diesem Fall beide Membranen mit Gewindebuchsen versehen, deren Gewinde gleichläufig sind, so wird der gewünschte Effekt noch verstärkt.

Das Drehen der Steuerspindel wird durch eine Werkzeugansatzstelle erleichtert. Diese Werkzeugansatzstelle wird bevorzugt an einer Stelle der Steuerspindel vorgesehen, die ohne größere Demontagen zugänglich ist, beispielsweise im Arbeitsbereich des Steuerschiebers. Eine Korrektur des Hinkgrades ist dann ohne Demontage der Arbeitskammern leicht möglich.

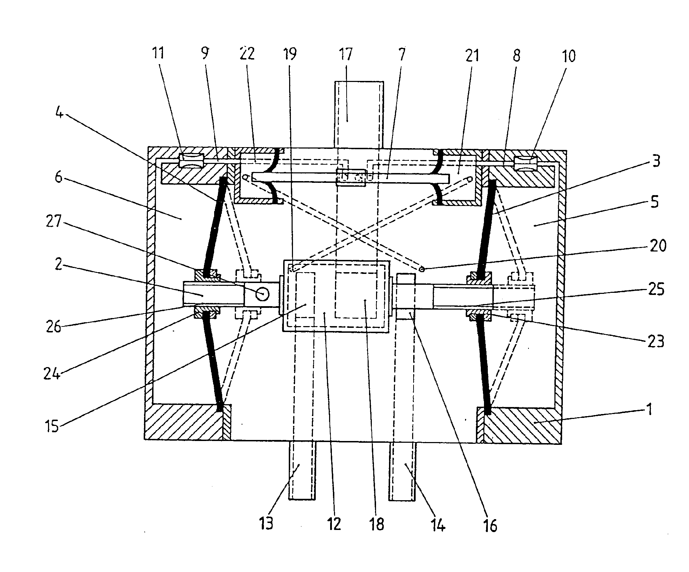

Ein Ausführungsbeispiel der Erfindung ist in der Zeichnung, die einen schematischen Querschnitt durch den Pulsator zeigt, dargestellt.

Mit 1 ist das Pulsatorgehäuse bezeichnet mit der Steuerspindel 2, die an ihren beiden Seiten mit Membranen 3, 4 versehen ist, die die Arbeitskammern 5, 6 begrenzen. Über eine Schaltvorrichtung 7, deren Funktion allgemein bekannt ist, werden die Arbeitskammern 5, 6 über die Kanäle 8, 9 und die Drosseln 10, 11 abwechselnd und wechselseitig mit Atmosphärendruck oder Unterdruck beaufschlagt. Der auf der Steuerspindel 2 angeordnete Steurerschieber 12 verbindet die zu den Melkbecherzwischenräumen führenden Anschlußstutzen 13, 14 über die Steuerkanäle 15, 16 bei der Hin- und Herbewegung der Steuerspindel 2 abwechselnd und wechselseitig mit dem Unterdruckanschluß 17 und der Atmosphäre über den Steuerkanal 18.
Seine jeweilige Endposition erreicht der Steuerschieber 12 nach Überdeckung einer Steueröffnung 19 bzw. 20, die in diesem Fall eine Kammer 21 bzw. 22 mit dem Unterdruckanschluß 17 verbindet und dadurch die Schaltvorrichtung 7 aktiviert, wodurch ein Druckwechsel in den Arbeitskammern 5, 6 erfolgt. Der Steuerschieber 12 wird nun in die entgegengesetzte Richtung bewegt.
Die Membranen 3, 4 sind mittels Gewindebuchsen 23, 24 auf gleichläufigen endseitigen Gewinden 25, 26 an der Steuerspindel 2 festgelegt, die ihrerseits drehbar, aber axial fixiert mit dem Steuerschieber 12 verbunden ist.
Eine Werkzeugansatzstelle 27 in Form einer Bohrung durch die Steuerspindel 2 im Arbeitsbereich des Steuerschiebers 12 ermöglicht eine unproblematische Korrektur des Hinkgrades mit jedem in die Bohrung passenden Stift.

Wird bei der Überprüfung des Pulsators beispielsweise festgestellt, daß der Saugtakt am Anschlußstutzen 14 kürzer ist als am Anschlußstutzen 13, so genügt in der Regel ein Verdrehen der Steuerspindel 2 um weniger als eine ganze Umdrehung, um die Saugtakte zu egalisieren. Die Drehrichtung ist in diesem Fall so zu wählen, daß sich die Membrane 3 zum Ende der Steuerspindel 2 und die Membrane 4 zum Steuerschieber 12 hin bewegt. Der Steuerschieber 12 benötigt dann eine längere Zeit bis zum Erreichen der Steueröffnung 20, und der Steuerkanal 16 ist jetzt länger mit dem Steuerkanal 18 verbunden.
In der entgegengesetzten Arbeitsposition des Steuerschiebers 2 führt die beschriebene Maßnahme zu einer kürzeren Überdeckungszeit für die Steuerkanäle 15 und 18 und damit auch zu einer Verkürzung des Saugtaktes am Anschlußstutzen 13.

Die gewünschte Taktzahl des Pulsators kann auf einfache Weise dadurch eingestellt werden, daß beide Membranen 3, 4 im gleichen Maße zu den ihnen zugeordneten Arbeitskammern 5, 6 hin- oder von ihnen wegbewegt werden, wodurch das aktive Volumen der Arbeitskammern 5, 6 vergrößert oder verkleinert wird.

## Patentansprüche

1. Pulsator für Melkmaschinen, bestehend aus einem eine Steuerspindel (2) führenden Gehäuse (1), einem von der Steuerspindel (2) betätigten Steuerschieber (12) zur abwechselnden Verbindung von Pulsatorausgängen mit einer Unterdruckquelle und Atmosphäre, jeweils einer spindelendseitig in einer Arbeitskammer (5, 6) angeordneten, die Hin- und Herbewegung der Steuerspindel (2) bewirkenden Membrane (3, 4) und einer in seinen jeweiligen Endpositionen durch den Steuerschieber (12) ausgelösten Schaltvorrichtung (7) zur wechselseitig und gegensinnig erfolgenden Verbindung der Arbeitskammern (5, 6) mit Unterdruck und Atmosphäre, **dadurch gekennzeichnet,** daß Mittel (23, 24, 25, 26, 27) vorgesehen sind, durch die eine axiale Verschiebung der Lage zumindest einer der Membranen (3, 4) relativ zur Steuerspindel (2) ermöglich wird, dadurch daß mindestens eine der Membranen (3, 4) mit einer Gewindebuchse (23, 24) versehen ist, die auf einem endseitig an der Steuerspindel (2) vorgesehenen Gewinde (25, 26) positioniert ist, und daß die Steuerspindel (2) drehbar und axial fixiert im Steuerschieber (12) gelagert ist.

2. Pulsator nach Anspruch 1, dadurch gekennzeichnet, daß beide Membranen (3, 4) mit Gewindebuchsen (23, 24) versehen sind, die gleichläufig sind.

3. Pulsator nach einem der Ansprüche 1 oder 2, dadurch gekennzeichnet, daß die Steurerspindel (2) mit einer Werzeugansatzstelle (27) versehen ist.

## Claims

1. Milking machine pulsator consisting of a housing (1) guiding a control spindle (2), a control slide (12) operated by the control spindle (2) for alternately communicating the pulsator outlets with a vacuum source and the atmosphere, a diaphragm (3) arranged on each side of the spindle in the working chamber (5, 6) causing back and forth movement of the control spindle (2), and a switching device (7) released by the control slide (12) in its respective final positions for alternate and oppositely directed communication of the working chambers (5, 6) with vacuum and atmosphere, **characterized in that** means (23, 24, 25, 26, 27) are provided which enable axial displacement of the position of at least one of the diaphragms (3,4) relative to the control spindle (2) in that at least one of the diaphragms (3, 4) is provided with a threaded bush (23, 24) which is positioned on a thread (25, 26) located at the end of the control spindle (2), and in that the control spindle (2) is rotatable and axially fixed in the control slide (12).

2. Pulsator according to claim 1, characterized in that both diaphragms (3, 4) are provided with threaded bushes (23, 24) which move in the same direction.

3. Pulsator according to claims 1 or 2, characterized in that the control spindle (2) is provided with a tool attachment point (27).

## Revendications

1. Pulsateur pour machines à traire constitué d'un boîtier (1) conduisant une tige de commande (2), d'un tiroir (12) actionné par la tige de commande (2) et servant à relier les sorties du pulsateur alternativement à une source de vide et à l'atmosphère, d'une membrane (3, 4) aménagée dans une chambre de travail (5, 6) sur chaque bout de la tige de commande et provoquant le mouvement de va-et-vient de celle-ci, et d'un dispositif de commutation (7) déclenché par le tiroir dans ses positions finales pour le raccordement alternatif et inverse des chambres de travail (5, 6) au vide et à l'atmosphère **caractérisé en ce que** des moyens (23, 24, 25, 26, 27) sont prévus permettant le déplacement axial de la position d'au moins une membrane (3,4) par rapport à la tige de commande (2), en ce qu'au moins l'une des membranes (3, 4) possède une douille filetée (23, 24) disposée sur un filet (25, 26) prévu au bout de la tige de commande, et en ce que la tige de commande (2) est rotative et axialement fixée dans le tiroir (12).

2. Pulsateur selon la revendication 1, caractérisé en ce que les deux membranes (3, 4) possèdent des douilles filetées (23, 24) qui se déplacent dans le même sens.

3. Pulsateur selon l'une des revendications 1 ou 2, caractérisé en ce que la tige de commande (2) est pourvue d'un point d'application d'outil (27).
